# EUROPÄISCHE PATENTSCHRIFT

(11) **EP 2 087 262 B1**
(45) Veröffentlichungstag und Bekanntmachung des Hinweises auf die Patenterteilung: **15.09.2010**
(21) Anmeldenummer: 07818695.4
(22) Anmeldetag: 04.10.2007
(51) Int. Cl.: F16K 1/30, F16K 31/06, F16K 35/00

(54) **VERSCHLUSSVORRICHTUNG FÜR EINEN MIT DRUCKGAS BEFÜLLBAREN DRUCKBEHÄLTER EINES KALTGASGENERATORS**
CLOSURE APPARATUS FOR A PRESSURE CONTAINER, WHICH CAN BE FILLED WITH COMPRESSED GAS, OF A COLD GAS GENERATOR
DISPOSITIF DE FERMETURE D'UN RÉCIPIENT SOUS PRESSION REMPLI DE GAZ SOUS PRESSION D'UN GÉNÉRATEUR DE GAZ FROID

(30) Priorität: 04.10.2006 DE 102006047272; 17.01.2007 DE 102007003320
(43) Veröffentlichungstag der Anmeldung: 12.08.2009
(73) Patentinhaber: MBB International Group AG, 6440 Brunnen (CH); Häge, Martin, 74357 Bönningheim (DE)
(72) Erfinder: HÄGE, Martin, 74357 Bönnigheim (DE); GRANTZ, Helmut, 71067 Sindelfingen (DE); HELMS, Gunnar, 71272 Renningen (DE)
(74) Vertreter: Maser, Jochen
(86) Internationale Anmeldenummer: PCT/EP2007/008616
(87) Internationale Veröffentlichungsnummer: WO 2008/040542

(56) Entgegenhaltungen:
- DE-B- 1 500 634
- DE-U- 1 735 417
- FR-A- 1 591 794

## Beschreibung

Die Erfindung betrifft eine Verschlussvorrichtung für einen mit Druckgas befüllbaren Druckbehälter eines Kaltgasgenerators gemäß dem Oberbegriff des Anspruchs 1.

Aus der US-PS 6,068,288 geht eine Verschlussvorrichtung für einen mit Druckgas befüllbaren Druckbehälter eines Kaltgasgenerators hervor. Solche Kaltgasgeneratoren werden für Fahrzeug-Airbagsysteme eingesetzt. Die Verschlussvorrichtung umfasst einen Ventilkörper, der eine mit der Umgebung kommunizierende Behälteröffnung in einer Ruheposition schließt. Zum Ausströmen des Druckgases ist eine elektromagnetische Antriebsvorrichtung vorgesehen, durch welche der Ventilkörper in eine Arbeitsposition überführbar ist. Der Ventilkörper ist als Schieber ausgebildet. Durch eine Verschiebebewegung können unterschiedliche Strömungspfade freigegeben werden, um ein Ausströmen des Druckgases zu ermöglichen. Des Weiteren wird durch die Verschiebebewegung des Schiebers auch erzielt, dass die Verschlussvorrichtung wieder geschlossen wird. Diese Vorrichtung weist den Nachteil auf, dass hohe Kräfte zur Ansteuerung des Schiebers erforderlich sind. Darüber hinaus erschweren diese erhöhten Kräfte die Ansteuerung eines solchen Schiebers, vor allem die Schließbewegung der Verschlusseinrichtung. Dabei geht oft eine nicht vollständige Dichtigkeit mit einher, so dass eine Leckageströmung gegeben und der Kaltgasgenerator für weitere Anwendungen nur bedingt oder gar nicht mehr einsetzbar ist.

Der Erfindung liegt deshalb die Aufgabe zugrunde, eine Verschlussvorrichtung für einen mit Druckgas befüllbaren Druckbehälter eines Kaltgasgenerators zu schaffen, der eine dosierte Abgabe des unter hohem Druck stehenden Druckgases und ein sicheres Schließen nach der Abgabe des Druckgases ermöglicht.

Diese Aufgabe wird erfindungsgemäß durch die Merkmale des Hauptanspruchs gelöst. Weitere vorteilhafte Ausgestaltungen und Weiterbildungen sind in weiteren Ansprüchen angegeben.

Die Verschlussvorrichtung weist erfindungsgemäß zwischen dem Ventilsitz einer Ausblasöffnung und der Antriebsvorrichtung zum Betätigen von zumindest einem Ventilkörper eine auf den Ventilkörper aufzubringende, die Schließkraft reduzierende Einrichtung auf, welche den Ventilkörper zwischen einer Arbeitsposition und einer Ruheposition ansteuert. Durch die Schließkraftreduzierung ist eine dosierte und exakt regelbare Abgabe von dem unter hohen Druck stehenden und abzugebenden Druckgas aus dem Druckbehälter ermöglicht. Gleichzeitig kann auch die Kraft zum Öffnen der Verschlussvorrichtung reduziert werden. In einem solchen Druckbehälter wird das Druckgas mit einem Betriebsdruck von beispielsweise 6.10⁷ bis 10⁸ Pa vorliegen. Die Offnungs- und Schließbewegung der Verschlussvorrichtung muss innerhalb weniger Millisekunden erfolgen und gegen diese hohen Betriebsdrücke arbeiten. Durch eine die auf den Ventilkörper aufzubringende Schließkraft reduzierende Einrichtung kann sowohl ein schlagartiges Öffnen der Verschlusseinrichtung als auch eine schnelle Abriegelung der Behälteröffnung ermöglicht werden. Durch die elektrische Ansteuerung der Verschlussvorrichtung kann in Abhängigkeit der Unfallschwere wie beispielsweise der Aufprallgeschwindigkeit die benötigte Druckgasmenge für ein Airbag angepasst werden. Des Weiteren kann die Füllgeschwindigkeit sowie auch ein nochmaliges Füllen eines Drucksackes bei einem Sekundäraufprall ermöglicht sein.

Nach einer bevorzugten Ausführungsform der Erfindung ist vorgesehen, dass die Einrichtung ein Druckelement aufweist, welches an einem zum Ventilkörper weisenden Ende zumindest eine Druckfläche aufweist, durch welche zumindest ein Ventilkörper zur Anlage an einer Öffnung eines Ventilsitzes überführbar ist. Dadurch wird ermöglicht, dass über die Druckfläche, die insbesondere kegelförmig ausgebildet ist, Hebelkräfte erzeugt werden, die die tatsächlich erforderliche Schließkraft reduzieren. Gleichzeitig ist auch eine geringe Lösekraft ermöglicht, so dass eine einfache Ansteuerung über einen elektrischen Antrieb ermöglicht ist.

Nach einer bevorzugten Ausführungsform sind an einem Ventileinsatz mehrere Ventilsitze mit radial ausgerichteten Öffnungen vorgesehen, denen jeweils ein Ventilkörper zugeordnet ist. Die vorzugsweise kegelförmige Druckfläche des Druckelementes greift bevorzugt gemeinsam an den Ventilkörpern an. Die Ventilkörper können beispielsweise als Dichtkugeln oder Dichtsegmente ausgebildet sein, welche durch einen Käfig in Umfangsrichtung zueinander angeordnet sind. Durch die kegelförmige Fläche am Druckelement kann bevorzugt ein gleichmäßiges und gleichzeitiges Angreifen an allen Ventilkörpern erfolgen, so dass auch eine schnelle Schließbewegung ermöglicht ist. Alternativ kann auch eine nacheinanderfolgende Schließbewegung einzelner Ventilkörper vorgesehen sein.

Des Weiteren ist bevorzugt vorgesehen, dass das Druckelement zum zumindest einen Ventilkörper verschiebbar durch die Antriebsvorrichtung ansteuerbar und die Druckfläche am Druckelement in einem spitzen Winkel zur Verschieberichtung ausgebildet ist. Dadurch kann eine sehr hohe Anpresskraft bewirkt werden, um die Ventilkörper zur Öffnung am Ventileinsatz in radialer Bewegungsrichtung zu positionieren und die jeweilige Öffnung zu schließen. Die Hubstrecke und die Steigung der kegelförmigen Fläche ist auf die Form der Ventilkörper und den erforderlichen Öffnungsquerschnitt anpassbar. Die Druckfläche kann auch einen gekrümmten oder hyperbolischen Verlauf aufweisen.

Das Druckelement und der Ventileinsatz bilden bevorzugt einen Aufnahmeraum für die Ventilkörper, der durch eine radial ausgerichtete Anlagefläche begrenzt ist. Diese Anlagefläche grenzt unmittelbar an eine radiale Öffnung am Ventileinsatz an. Dadurch verbleiben die Ventilkörper, insbesondere die Dichtungskugeln, in diesem Aufnahmeraum. Gleichzeitig wirkt diese Anlagefläche als Widerlager während der Schließbewegung des Druckelementes, um die Ventilkörper über die Schräge auf die Öffnung im Ventileinsatz zuzubewegen.

Das Druckelement umfasst gemäß dieser ersten vorteilhaften Ausführungsform einen topfförmigen Abschnitt, der den zumindest einen Ventilkörper umgibt. Dabei nimmt der topfförmige Abschnitt an einem innenliegenden freien Ende die Druckfläche, insbesondere kegelförmige Fläche, auf, und zwischen dem Boden und der Druckfläche am topfförmigen Abschnitt sind Durchtrittsöffnungen vorgesehen. Somit kann nicht nur ein Ausströmen zwischen den Ventilkörpern, sondern ein zusätzliches Ausströmen des Druckgases über die Durchgangsöffnung erfolgen, damit eine schnelle Zuführung des Druckgases in einem Drucksack oder Airbag ermöglicht ist.

Das Druckelement weist des Weiteren in dem topfförmigen Abschnitt eine Führung auf, die am Außenumfang des Ventileinsatzes angreift. Dadurch ist das Druckelement unmittelbar nahe den Ventilkörpern geführt, so dass eine exakte Führung der kegelförmigen Flächen zur Positionierung der Ventilkörper zu den Öffnungen im Ventileinsatz ermöglicht ist.

Zwischen der Antriebsvorrichtung und dem Druckelement ist bevorzugt ein Kraftspeicherelement, insbesondere eine Druckfeder, vorgesehen, die eine Kraft in Schließrichtung der Ventilkörper auf das Druckelement ausübt. Dadurch wird ermöglicht, dass aufgrund der Druckfeder die Verschlussvorrichtung in einem stromlosen Zustand in eine Ruheposition übergeführt und gehalten wird. Diese stromlose Ruheposition ist als Sicherheitsmaßnahme erforderlich, damit bei einem Ausfall eines Steuerstromes nicht unbeabsichtigt ein Ausströmen des Druckgases erfolgt. Durch die erfindungsgemäße Einrichtung zur Reduzierung der Schließkraft kann eine Druckfeder mit verringerter Druckkraft vorgesehen sein, wodurch eine Verringerung des Bauraumes ermöglicht ist.

Das Kraftspeicherelement ist bevorzugt in einer Kammer im Gehäuse der Antriebsvorrichtung vorgesehen, welche zum Ventilkörper hin offen ausgebildet ist und seitliche Durchtrittsöffnungen aufweist. Dadurch kann eine kompakte Bauweise erzielt werden, indem das Gehäuse am Verbindungsrand eines Deckels vom Druckbehälter fixiert und ein Strömungsweg für das Druckgas aus dem Druckbehälter zum Airbag freigegeben wird, um ein schnelles Füllen zu ermöglichen.

Der Ventileinsatz ist gemäß einer bevorzugten Ausführungsform in einer Ausblasöffnung im Deckel für den Druckbehälter befestigt. Dieser Deckel kann ein Teil der Verschlussvorrichtung oder bereits als Bauteil fest mit dem Druckbehälter verpresst oder verbunden sein. Der Ventileinsatz ist bevorzugt lösbar durch ein Schraubgewinde in einer zentralen Ausblasöffnung im Deckel angeordnet.

Die Antriebsvorrichtung weist bevorzugt einen Befestigungsabschnitt auf, der an einem Verbindungsrand des Deckels angreift, so dass die Antriebsvorrichtung zum Druckbehälter montierbar ist. Somit kann der Druckbehälter auch separat zur Verschlussvorrichtung beigestellt werden und ermöglicht eine einfache Montage und anschließende Befüllung.

In dem Deckel ist des Weiteren bevorzugt ein Überdruckbegrenzungsventil vorgesehen, welches in einer Bohrung einsetzbar ist, die die Ausblasöffnung mit der Umgebung verbindet. Dadurch kann ein maximaler Hochdruck für den Behälterinnenraum eingestellt werden.

Des Weiteren ist bevorzugt vorgesehen, dass der Deckel am Verbindungsrand einen weiteren Befestigungsabschnitt aufweist, an dem der mit Druckgas befüllbare Sack beziehungsweise Airbag angeordnet ist. Dadurch ist eine einfache Montage ermöglicht. Dieser Befestigungsabschnitt kann standardisiert sein, so dass verschiedene Ausführungsformen der Druckgassäcke daran befestigbar sind.

Eine zweite bevorzugte Ausführungsform der Erfindung sieht vor, dass eine die aufzubringende Schließkraft reduzierende Einrichtung einen als Kolben ausgebildeten Ventilkörper aufweist, der mit einer Stirnfläche an einen Ventilsitz an der Ausblasöffnung anliegt und eine erste Druckfläche umfasst und dass der Ventilkörper gegenüberliegend in einer Vorkammer angeordnet ist, in der mit einem Drosselventil ein gegenüber dem Betriebsdruck des Druckgases reduzierter Vorkammerdruck einstellbar ist, der auf eine zweite Druckfläche des Ventilkörpers in der Vorkammer wirkt. Durch diese Ausgestaltung wird aufgrund einer Druckkompensation der zumindest zwei Druckflächen eine Verringerung der Schließkräfte erzielt. Dadurch kann ein erleichtertes Schließen erzielt werden.

Zur Einstellung des Vorkammerdrucks gemäß der zweiten Ausführungsform ist das Drosselventil in einem Kanal vorgesehen, der die Vorkammer mit dem Druckbehälter verbindet. Dadurch ist eine einfache konstruktive Ausgestaltung vorgesehen, um in der Vorkammer einen Druck aufzubauen, der bevorzugt durch das Drosselventil einstellbar ist.

Des Weiteren ist bevorzugt vorgesehen, dass der Kolben von einer an der Antriebsvorrichtung anordenbaren Haltehülse gehalten ist und die Haltehülse einen Führungsabschnitt umfasst. Dadurch kann das Druckelement verkippungsfrei geführt werden. Die Haltehülse kann als separates Bauteil ausgebildet sein oder einstückig an dem Deckel integriert werden.

Zur Verringerung der Kräfte durch eine Druckkompensation in der Einrichtung ist des Weiteren bevorzugt vorgesehen, dass der Ventilkörper zwischen dem ersten Ventilsitz und einem durch die Haltehülse ausgebildeten weiteren Ventilsitz eine dritte Druckfläche aufweist, an der der Atmosphärendruck anliegt. Diese dritte Druckfläche ist bevorzugt ringförmig ausgebildet. Dadurch wird des Weiteren eine Kraftreduzierung ermöglicht, da sich die Kräfte aus dem Druck der Vorkammer und dem ringförmigen Querschnitt der dritten Druckfläche als auch der ersten Druckfläche addieren. Bei geeigneter Wahl der Querschnitte und des Druckdifferenzes kann sogar die resultierende Kraft gleich null werden.

Vorteilhafterweise sind zwischen der Haltehülse und dem Gehäuse der Antriebsvorrichtung und vorzugsweise zwischen dem Führungsabschnitt der Haltehülse und dem Ventilkörper Dichtungselemente vorgesehen. Dadurch werden stabile Vorkammerdrücke aufrecht erhalten. Bei einem Betriebsdruck des Druckgases im Druckbehälter von beispielsweise 8.10⁷ Pa wird bevorzugt ein Vorkammerdruck von beispielsweise 4.10⁷ Pa über das Drosselventil eingestellt.

Nach einer weiteren vorteilhaften Ausgestaltung der Erfindung ist in der Vorkammer ein Kraftspeicherelement, insbesondere eine Druckfeder, vorgesehen, die eine Kraft in Schließrichtung ausübt. Durch die über die Druckflächen erzielte Druckkompensation kann ein Kraftspeicherelement mit einer geringen Kraft eingesetzt werden, um den nötigen Dichtungsdruck beziehungsweise die erforderliche Schließkraft aufzubringen, damit im stromlosen Zustand die Verschlussvorrichtung den Druckbehälter sicher schließt. Gleichzeitig ist eine einfache Ansteuerung, vorzugsweise über einen Elektromagneten, ermöglicht, der gegen die Federkraft beim Öffnen der Verschlussvorrichtung arbeitet.

Nach einer bevorzugten dritten alternativen Ausführungsform der Erfindung ist vorgesehen, dass eine Öffnungsbewegung des Ventilkörpers zur Öffnung der Ausblasöffnung im Deckel nicht unmittelbar durch die Antriebsvorrichtung angesteuert wird, sondern über den in der Vorkammer herrschenden Vorkammerdruck ansteuerbar ist. Hierzu ist bevorzugt vorgesehen, dass der Vorkammerdruck durch ein Steuerventil veränderbar ist, welches eine Durchgangsöffnung zwischen der Vorkammer und eine mit dem Atmosphärendruck beaufschlagte Querbohrung öffnet und schließt. Der Ventilkörper ist in der Vorkammer frei verfahrbar vorgesehen. Aufgrund der Druckkompensation zwischen dem Behälterinnendruck und dem Vorkammerdruck sowie den Verhältnissen der Druckflächen verbleibt der Kolben bei geschlossenem Steuerventil in einer Schließposition. Sobald das Steuerventil öffnet und Druckgas aus der Vorkammer nach außen abströmt, wird der dadurch entstehende Überdruck des Druckgases im Druckbehälter den Ventilkörper vom Ventilsitz abheben, und das Druckgas kann entweichen.

Bevorzugt ist vorgesehen, dass das Steuerventil von der Antriebsvorrichtung ansteuerbar ist. Dadurch wird der Ventilkörper unmittelbar über die Antriebsvorrichtung angesteuert, das heißt, der Ventilkörper wird mittelbar angesteuert, um diesen in eine Arbeitsposition überzuführen und die Ausblasöffnung zu öffnen.

Bevorzugt ist wiederum ein Kraftspeicherelement vorgesehen, welches das Steuerventil mit einer Kraft in Schließrichtung beaufschlagt. Dadurch ist wiederum die Sicherheitsfunktion gegeben, dass bei stromlosem Zustand der Verschlussvorrichtung der Druckgasbehälter geschlossen gehalten bleibt.

Nach einer weiteren vorteilhaften Ausgestaltung der dritten Ausführungsform ist vorgesehen, dass das Steuerventil einen Ventilsitz in einem Zwischenflansch aufweist, der die Antriebsvorrichtung aufnimmt und am Deckel anordenbar ist. Dadurch wird ein modularer Aufbau geschaffen, wobei einzelne Bauteilkomponenten einfacherweise austauschbar vorgesehen sind. Gleichzeitig kann an den einzelnen Schnittstellen eine Dichtung vorgesehen sein, so dass die Vorkammer wiederum druckstabil ist.

Nach einer weiteren alternativen Ausführungsform der Erfindung ist vorgesehen, dass zwischen einem Führungsabschnitt des Ventilkörpers, der den Ventilkörper des Steuerventils zumindest teilweise umgibt und einem Ventilkörper des Steuerventils eine Zwangssteuerung vorgesehen ist, derart, dass bei einer Öffnungsbewegung des Ventilkörpers vom Steuerventil ein Abheben des Ventilkörpers vom zumindest einen Ventilsitz der Ausblasöffnung erfolgt. Diese Zwangssteuerung in eine Bewegungsrichtung ermöglicht, dass sehr hohe Gasvolumina bei hohen Drücken steuerbar sind, ohne dass dazu besonders hohe Kräfte aufgebracht werden müssen. Gleichzeitig wird ein Öffnen sichergestellt.

Die eine Vorkammer aufweisenden Ausführungsformen weisen gemeinsam den Vorteil auf, dass ein einfaches Befüllen der Druckbehälter ermöglicht ist, ohne dass eine sogenannte Glocke erforderlich ist, wie dies bei pyrotechnisch geöffneten Hybrid- oder Kaltgasgeneratoren erforderlich ist.

Diese alternative Ausführungsform weist des Weiteren den Vorteil auf, dass die Antriebsvorrichtung zur Ansteuerung des Steuerventils als elektromagnetischer Antrieb ausgelegt sein kann. Aufgrund der geringen Kräfte und des geringen Hubweges können beispielsweise auch piezokeramische Plattenstapel- oder piezokeramische Biegeplattenantriebe vorgesehen sein.

Nach einer weiteren bevorzugten Ausgestaltung der Erfindung ist vorgesehen, dass die Ansteuerung der Antriebsvorrichtung und/oder der Druckbehälter von einem Drucksensor überwacht ist. Dadurch kann ein ein- oder mehrfaches kurzzeitiges Öffnen und Schließen des Ventils realisiert werden. Durch die ansteuerbaren Ventilhübe kann auch das ausströmende Volumen bestimmt werden. Durch die Verwendung solcher Drucksensoren wird ein geschlossener Regelkreis ermöglicht, so dass eine Information über die ausgeströmte Gasmenge zur Verfügung steht. Durch den Drucksensor besteht auch die Möglichkeit, eine ständige Prüfung der Funktionsfähigkeit und der Füllmenge des Gasgenerators vorzunehmen. Dies erleichtert insbesondere die Wartung.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Schnittdarstellung eines Kalt- gasgenerators mit einer ersten erfindungsgemäßen Ausführungsform einer Verschlussvorrichtung,
- Figur 2: eine vergrößerte schematische Schnittdarstellung der Verschlussvorrichtung gemäß Figur 1 in ge- schlossenem Zustand,
- Figur 3: eine schematisch vergrößerte Schnittdarstellung der Verschlussvorrichtung gemäß Figur 1 in geöff- netem Zustand,
- Figur 4: eine schematische Schnittdarstellung einer alterna- tiven Ausführungsform einer Verschlussvorrichtung zu Figur 1,
- Figur 5: eine schematische Schnittdarstellung der Ver- schlussvorrichtung gemäß Figur 4 in geöffnetem Zustand,
- Figur 6: eine schematische Schnittdarstellung einer weite- ren Ausführungsform einer Verschlussvorrichtung,
- Figur 7a und b: eine schematische Schnittdarstellung einer weite- ren alternativen Ausführungsform einer Verschluss- vorrichtung gemäß Figur 1,
- Figur 8: eine schematische Schnittdarstellung einer alterna- tiven Ausführungsform einer Verschlussvorrichtung zu Figur 1,
- Figur 9: eine schematische Schnittdarstellung der Ver- schlussvorrichtung gemäß Figur 8 in geöffnetem Zustand,
- Figur 10: eine schematische Schnittdarstellung einer alterna- tiven Ausführungsform einer Verschlussvorrichtung zu Figur 1 und
- Figur 11: eine schematische Schnittdarstellung der Ver- schlussvorrichtung gemäß Figur 10 in geöffnetem Zustand.

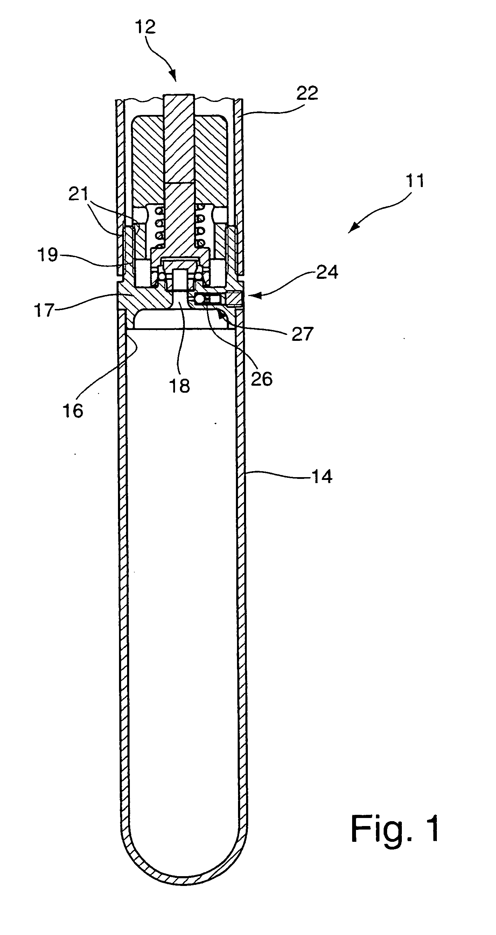

Die Figur 1 zeigt eine schematische Schnittdarstellung eines Kaltgasgenerators 11 mit einer ersten Ausführungsform einer Verschlussvorrichtung 12, die an einem Druckbehälter 14 vorgesehen ist. Der Druckbehälter 14 weist am oberen Ende eine Behälteröffnung 16 auf, die durch einen Deckel 17 verschlossen ist. Dieser Deckel 17 kann alternativ auch einteilig an dem Druckbehälter 14 oder als Komponente der Verschlussvorrichtung 12 ausgebildet sein. Der Deckel 17 weist bevorzugt zentral eine Ausblasöffnung 18 auf, welche durch die Verschlussvorrichtung 12 ansteuerbar ist. Der Deckel 17 umfasst einen Verbindungsrand 19, an dem die Verschlussvorrichtung 12 lösbar befestigt ist. Der Verbindungsrand 19 kann des Weiteren einen Befestigungsabschnitt 21, vorzugsweise ein Gewinde, aufweisen, an dem ein Drucksack 22 beziehungsweise ein Airbagansatz oder eine Befülleinrichtung mediumsdicht befestigt ist.

Bei dieser Ausführungsform ist vorgesehen, dass die Verschlussvorrichtung 12 außerhalb des Druckbehälters 14 angeordnet ist. Alternativ kann diese auch im Druckbehälter 14 vorgesehen sein.

In dem Deckel 17 ist ein Überdruckbegrenzungsventil 24 vorgesehen, welches bei einem Anstieg des Innendruckes über den zulässigen Berstdruck des Druckbehälters 14 öffnet und ein Abblasen des Druckgases ermöglicht. Bevorzugt ist vorgesehen, dass das Überdruckbegrenzungsventil 24 einen Drucksensor 27 umfasst, der ebenfalls in einer Bohrung 26 angeordnet ist, welche den Behälterinnenraum mit einem Atmosphärendruck außerhalb des Druckbehälters 14 verbindet. Dieser Drucksensor 27 kann als Bestandteil einer Druckplatte ausgebildet sein, um den anstehenden Druck zu erfassen. Dadurch kann die Füllmenge des Druckgases im Druckbehälter 14 erfasst werden.

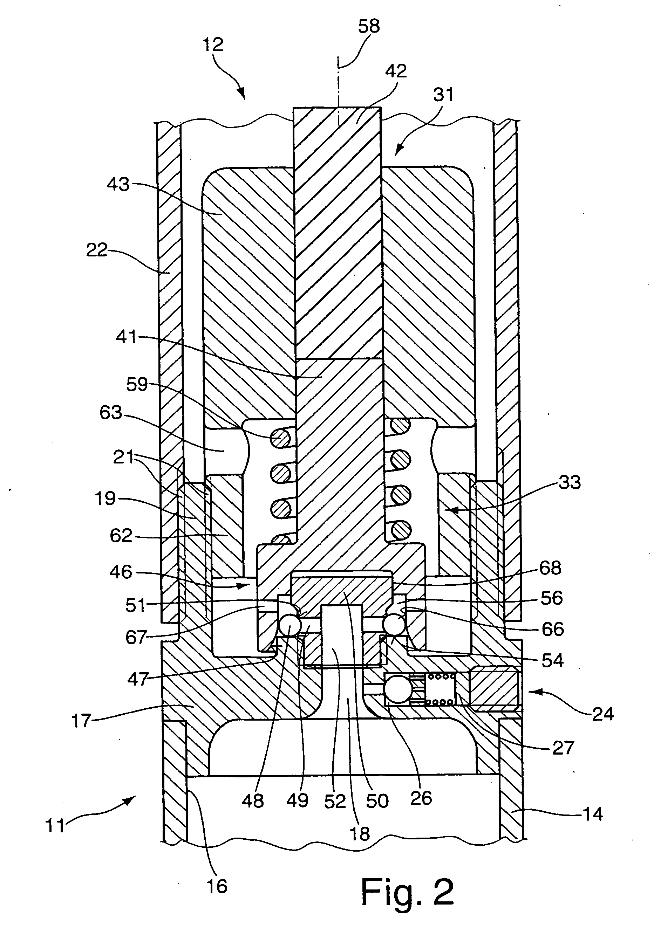

In Figur 2 ist eine vergrößerte Darstellung der erfindungsgemäßen Verschlussvorrichtung 12 dargestellt. Die Verschlussvorrichtung 12 besteht aus einer Antriebsvorrichtung 31, die bevorzugt als elektromagnetischer Antrieb ausgebildet ist. Diese Antriebsvorrichtung 31 wirkt auf eine die Schließkraft reduzierende Einrichtung 33 ein, welche zwischen einem Ventilsitz 51 einer Ausblasöffnung 18 und der Antriebsvorrichtung 31 vorgesehen ist.

Die Einrichtung 33, welche die aufzubringende Schließkraft reduziert, umfasst ein Druckelement 41, welches mit einem Anker 42 der Antriebsvorrichtung 31 verbunden ist, der über einen Aktuator 43 beziehungsweise Elektromagneten bewegbar ist. Das Druckelement 41 weist an seinem zur Ausblasöffnung 18 weisenden Ende einen topfförmigen Abschnitt 46 auf, an welchem eine vorzugsweise kegelförmige Druckfläche 47 innenliegend vorgesehen ist. Diese kegelförmige Fläche 47 greift an zumindest einem Ventilkörper 48 an, welcher beispielsweise als Druck-oder Dichtungskugel ausgebildet ist. Dieser Ventilkörper 48 schließt zumindest eine Öffnung 49 an einem Ventileinsatz 50, der in die Ausblasöffnung 18 einsetzbar ist. Der Ventileinsatz 50 weist bevorzugt mehrere radial ausgerichtete Öffnungen 49 auf, die mit einem Eintrittsbereich 52 in Verbindung stehen, der in die Ausblasöffnung 18 übergeht. An die Öffnung 49 des Ventileinsatzes 50 angrenzend ist eine Anlagefläche 54 vorgesehen, welche einen Aufnahmeraum 56 begrenzt, der zwischen dem Ventileinsatz 50 und dem Innenumfang des topfförmigen Abschnitts 46 des Druckelementes 41 gebildet ist. Die Anlagefläche 54 ist als Ringfläche ausgebildet, welche zumindest teilweise in den topfförmigen Abschnitt 46 eintauchen kann. Auf der Anlagefläche 54 liegen die Ventilkörper 48 auf.

Die Öffnungs- und Schließbewegung des Druckelementes 41 erfolgt entlang einer Längsachse 58, die bevorzugt mit der Achse der Ausblasöffnung 18 deckungsgleich ist. Das Druckelement 41 ist gegen ein Kraftspeicherelement 59, welches vorzugsweise als Druckfeder ausgebildet ist, nach oben verfahrbar. Das Kraftspeicherelement 59 ist in einer Kammer 61 vorgesehen, welche ein Teil eines Gehäuses 62 der Antriebsvorrichtung 31 ist, mit welcher dieses Gehäuse am Verbindungsrand 19 befestigt ist. In der Kammer 62 sind wiederum radial ausgerichtete Öffnungen 63 vorgesehen, um ein Ausströmen des Druckgases zu ermöglichen.

An die kegelförmigen Druckflächen 47 des Druckelementes 41 schließt sich eine zylinderförmige Wandfläche 66 an, in der Durchtrittsbohrungen 67 vorgesehen sind, damit das in den Aufnahmeraum 56 gelangende Druckgas zusätzlich nach außen strömen kann. Am Boden des topfförmigen Abschnitts 46 ist eine Führung 68 vorgesehen, welche an einem Außenumfang des Ventileinsatzes 51 angreift.

In Figur 2 ist die Verschlussvorrichtung 12 in einer Schließposition dargestellt. Dabei ist die Antriebsvorrichtung 31 stromlos und die Ausblasöffnung 18 geschlossen. Die Schließkraft wird über das Kraftspeicherelement 59 aufgebracht, wobei aufgrund der Einrichtung 33 die Schließkraft eines Kraftspeicherelementes 59, insbesondere Druckfeder, genügt. Aufgrund der kegelförmigen Fläche 47 beziehungsweise einer Steuerkurve werden die Haltekräfte erheblich reduziert. Diese erfindungsgemäße Anordnung umfasst einen Verstärkungsfaktor, der dem Tangens des Winkels der kegelförmigen Druckfläche 47 zur Längsachse 58 entspricht.

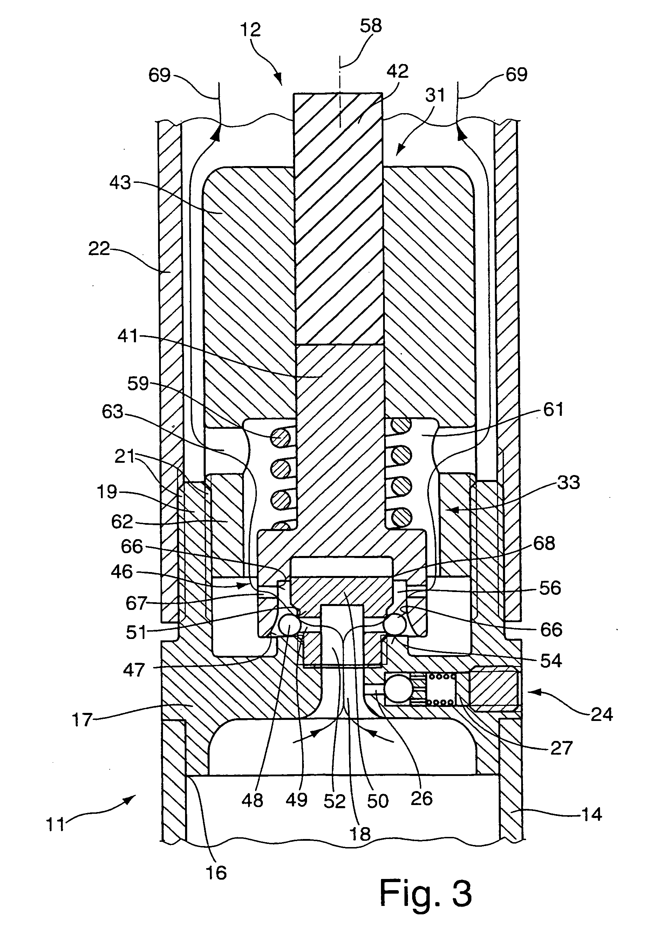

In Figur 3 ist die Verschlussvorrichtung gemäß Figur 2 in einer Arbeitsposition dargestellt. Die Ausblasöffnung 18 ist geöffnet, so dass das Druckgas gemäß den Pfeilen 69 aus dem Druckbehälter 14 in den Drucksack 22 kann. Zum Öffnen der Ausblasöffnung 18 wird der Aktuator 43 der Antriebsvorrichtung 31 bestromt. Der Anker 42 wird nach oben gezogen und arbeitet gegen das Kraftspeicherelement 59, so dass das Druckelement 41 nach oben bewegt wird. Dabei wird durch die kegelförmige Fläche 47 die Anpresskraft auf die Ventilkörper 48 reduziert, und aufgrund des größer werdenden Winkels beziehungsweise Freiraumes geben die Ventilkörper die Öffnungen 49 des Ventileinsatzes 50 frei. Das Druckgas kann in den Aufnahmeraum 56 und von dort über die Querbohrungen 67 zur Kammer 61 und durch die Öffnungen 63 in den Drucksack 22 gelangen. Zum Schließen der Verschlussvorrichtung wird die Antriebsvorrichtung 31 stromlos geschalten. Die gespeicherte Kraft der Druckfeder 59 führt das Druckelement 41 auf den Ventilkörper 51 zu. Über die kegelförmigen Druckflächen 47 werden die Ventilkörper 51 zu den jeweiligen Öffnungen 49 gedrückt, so dass diese verschlossen werden.

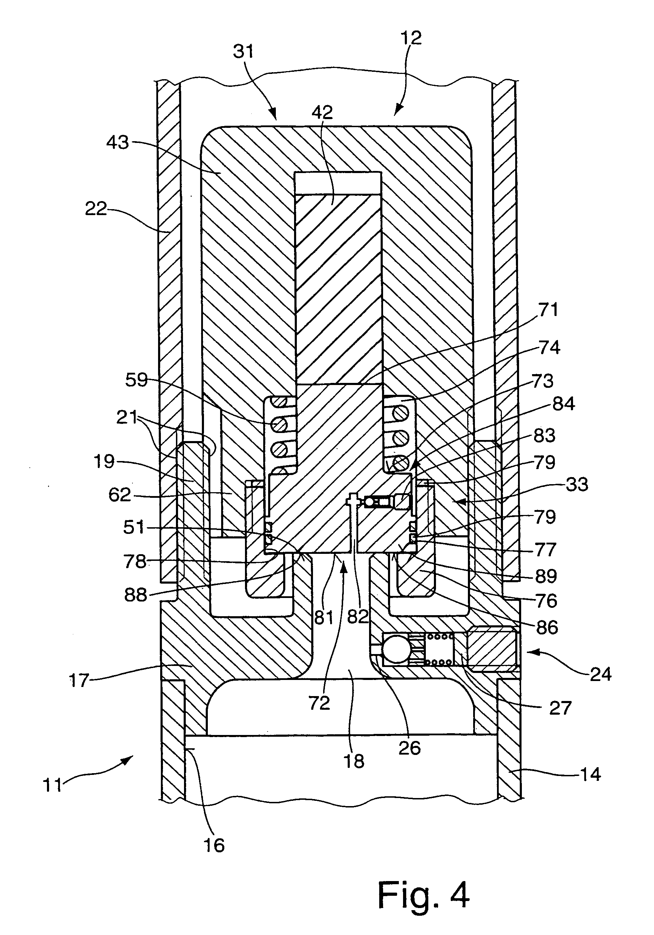

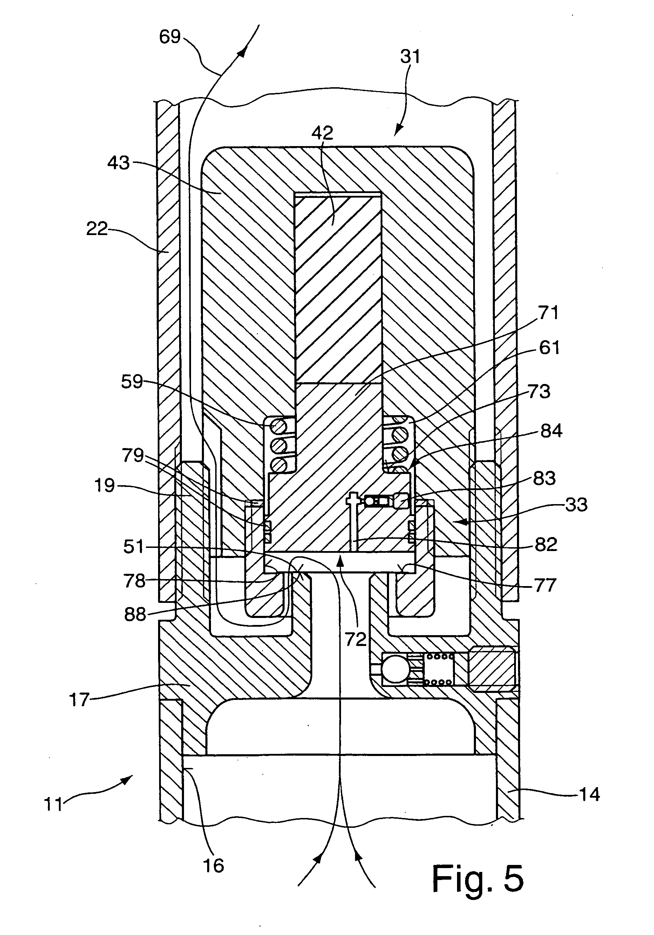

In Figur 4 ist eine alternative Ausführungsform der Verschlussvorrichtung 12 gemäß den Figuren 1 bis 3 in einer Schließposition dargestellt. . Figur 5 zeigt diese alternative Ausführungsform mit einer geöffneten Verschlussvorrichtung 12. Diese alternative Ausführungsform weist eine von den Figuren 1 bis 3 abweichende, die Schließkraft reduzierende Einrichtung 33 auf. Diese Einrichtung 33 wird nachfolgend näher beschrieben. Im Übrigen wird auf die vorangegangene Beschreibung Bezug genommen.

Die Einrichtung 33 umfasst einen Ventilkörper 71 mit einer Stirnfläche 72. Gegenüberliegend umfasst der Ventilkörper 71 eine Ringfläche 73, die in eine Vorkammer 74 weist. Der Ventilkörper 71 durchquert die Vorkammer 74 mit einem Stößel oder Stempel und ist mit dem Anker 42 der Antriebsvorrichtung 31 verbunden. In der Vorkammer 74 ist wiederum ein Kraftspeicherelement 59 angeordnet, welches an der Ringfläche 73 als auch in der Kammer 61 des Gehäuses 62 angreift. An dem Gehäuse 62 ist des Weiteren eine Haltehülse 76 vorgesehen, welche den Kolben 71 in der Vorkammer 74 hält. Diese Haltehülse 76 weist eine Führung 78 auf, welche einen Umfangswandabschnitt des Kolbens 71 längsverschieblich in der Vorkammer 74 aufnimmt. Bevorzugt kann die Führung 78 durch Dichtungen 79 versehen sein.

Ein am Deckel 17 beispielsweise einstückig angeformter Ventilsitz 51 umgibt die Ausblasöffnung 18. Der Ventilkörper 71 liegt mit der Stirnfläche 72 an einem ersten Ventilsitz 51 an. Der die Ausblasöffnung 18 abdeckende Bereich der Stirnfläche 72 bildet eine erste Druckfläche 81. Auf diese Druckfläche 81 wirkt der Innendruck des Druckgases. In der ersten Druckfläche 81 ist ein Kanal 82 vorgesehen, der zur Vorkammer 74 führt. In dem Kanal 82 ist ein Drosselventil 83 vorgesehen, welches analog zum Überdruckbegrenzungsventil 24 aufgebaut sein kann. In Abhängigkeit des voreingestellten Druckes des Drosselventils 83 gelangt Druckgas aus dem Druckbehälter 14 über den Kanal 82 in die Vorkammer 74. Dieses Druckgas wirkt auf die Ringfläche 73, welche zumindest teilweise als zweite Druckfläche 84 wirkt. An dem Ventilkörper 71 ist zwischen dem Ventilsitz 51 und ein Ventilsitz 77 der Haltehülse 76 ein Ringabschnitt ausgebildet, an dem Atmosphärendruck anliegt. Diese ringförmige Fläche bildet eine dritte Druckfläche 86.

Die kraftreduzierende Einrichtung 33 wird durch die Höhe des Druckdifferenzes zwischen dem Betriebsdruck, dem Vorkammerdruck des Druckgases und dem Atmosphärendruck bestimmt. Die Höhe des Druckdifferenzes bildet somit den Maßstab für die Kraft, mit der der Ventilkörper 71 gegen den Ventilsitz 51 gepresst werden muss. Dies veranschaulicht am Besten ein Beispiel: Der Betriebsdruck des Druckgases erzeugt an der ersten Druckfläche 81 eine Kraft, die den Ventilkörper 71 anheben möchte. Der Druck der Vorkammer 74 drückt gegen die erste Druckfläche 81 als auch gegen die dritte Druckfläche 86 mit der Kraft der zweiten Druckfläche 84. Da die dritte Druckfläche 86 Umgebungsdruck aufweist, verstärkt sich die Kraft durch den Druck der Vorkammer 74 gegen den Ventilkörper 71 und die Ventilsitze 51, 77.

Das Drosselventil 83 kann nun so eingestellt werden, dass sich die Kräfte der ersten bis dritten Druckfläche 81, 84, 86 ausgleichen. In einem solchen Fall sorgt das Kraftspeicherelement 59 für den benötigten Dichtungsdruck und der Aktuator 43 muss beim Öffnen der Ausblasöffnung 18 nur die Kraft des Kraftspeicherelementes 59 überwinden. Bevorzugt wird das Drosselventil 83 derart eingestellt, dass die Kraft, die auf den Ventilkörper 71 vorkammerseitig wirkt, geringfügig höher ist als die Kraft, die der Gasdruck auf die Stirnfläche 72 des Ventilkörpers 71 ausübt. Die Kraft des Kraftspeicherelementes 59 und das Druckverhältnis zwischen dem Druck der Vorkammer 74 und dem Druckgas sowie die Querschnittsverhältnisse zwischen der Ausblasöffnung 18 und der dritten Druckfläche 86 sind so abgestimmt, dass genügend Reservekraft für die Antriebsvorrichtung 31 vorhanden ist, um gegebenenfalls temperaturbedingte Drucktoleranzen auszugleichen, so dass die Verschlussvorrichtung 12 immer sicher geöffnet werden kann.

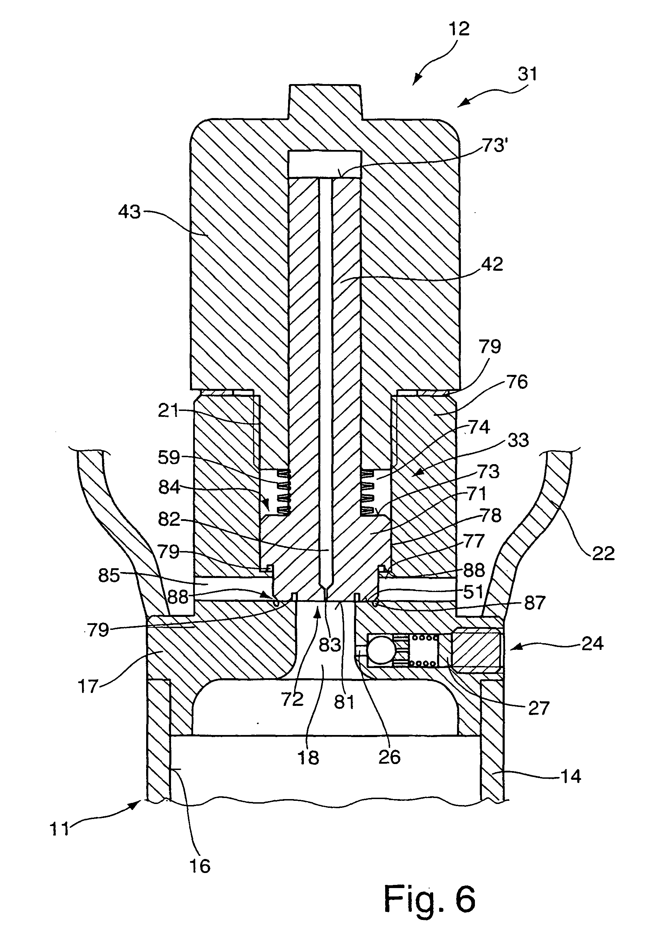

In Figur 6 ist eine weitere Ausführungsform einer Verschlussvorrichtung 12 dargestellt. In Bezug auf Übereinstimmungen, die mit der Ausführungsform gemäß den Figuren 4 und 5 gegeben sind, wird auf die Beschreibung zur Ausführungsform gemäß Figur 4 und 5 Bezug genommen. Abweichend hiervon ist die Haltehülse 76 beispielsweise einstückig an dem Deckel 17 angeformt. In dieser Haltehülse 76 sind Querbohrungen 85 vorgesehen, welche beim Abheben des Ventilkörpers 71 vom Ventilsitz 51 ein Ausströmen des Druckgases von der Auslassöffnung 18 über die Querbohrung 85 in den Drucksack 22 ermöglichen.

In dem Ventilkörper 71 ist ein Druckkanal 82 vorgesehen, der den Ventilkörper 71 und den vorzugsweise einstückig daran angeformten Anker 42 vollständig durchdringt. Dem Druckkanal 82 vorgeschalten ist eine Drossel 83 als Fixdrossel ausgebildet, welche während einer Öffnungsbewegung wirkt. Aufgrund des Durchganges über die Drossel 83 liegt in der Vorkammer 74 derselbe Druck wie in dem Druckbehälter 16 an. Im Drucksack 22 liegt Atmosphärendruck an, das bedeutet, dass über die Querbohrungen 85 und einer ringförmigen umlaufenden Nut 87 Atmosphärendruck anliegt. Der Ventilsitz 51 dichtet das Druckvolumen im Druckbehälter 16 ab, wobei die Größe beziehungsweise die Breite des Ventilsitzes 51 durch die Anordnung einer Nut 87 im Deckel 17 und einer Schrägfläche 88 am Ventilkörper 71 bestimmt ist. Der zweite Ventilsitz 77 ist als Dichtfläche ausgebildet und dichtet die Vorkammer 74 gegen den Atmosphärendruck ab. Diese Dichtung beziehungsweise Dichtfläche ist alternativ zu den ringförmigen Dichtungen an der Führung 78 gemäß Figur 4 und 5 gegeben. Zusätzlich kann eine Gleitdichtung zur Führung des Kolbens beziehungsweise des Ventilkörpers 71 als auch zur Abdichtung der Vorkammer 74 gegeben sein.

Um möglichst hohe Dichtungsdrücke für die Verschlusseinrichtung 12 zu erzielen, wird die Ringfläche des Ventilkörpers 71, die am Ventilsitz 51 anliegt, im Verhältnis zur Stirnfläche 81 der Auslassöffnung 18 möglichst klein gehalten. Dies kann durch die konstruktive Maßnahme über die Nut 87 und die Schrägfläche 88 unterstützt werden. Auch die Differenz in der Größe der Dichtfläche am Ventilsitz 77 zum Außenumfang der Ventilsitzfläche 51 ist möglichst gering zu halten. Bevorzugt ist am Außenumfang der des Ventilsitzes 77 beziehungsweise der Dichtfläche sowie am Außenumfang des Ventilkörpers 71 jeweils zur Ventilsitzfläche weisend eine Phase beziehungsweise eine Schrägfläche 88 vorgesehen, um die Fläche des Ventilsitzes 77 zu verkleinern. Durch diese Ausgestaltung beziehungsweise geometrische Auslegung der Verschlussvorrichtung 12 wird ermöglicht, dass der Kolben 71, der den Druckraum im Druckbehälter 14 gegen die Umgebung über Dichtsitze abdichtet, in Druckgas schwimmt und damit frei von Druckkräften ist. Die Dichtkraft wird ausschließlich oder nahezu ausschließlich durch die Druckfeder 59 aufgebracht. Somit ist eine gute Abstimmung mit den verwendeten Dichtungen möglich, die auch eine Langzeitabdichtung zulassen. Eine Regelung wird sehr effektiv und ist exakt durchzuführen. Zum Ausströmen des Druckgases benötigt das Druckgas nur eine geringe Umlenkung, um der durch die radial angeordneten Querbohrungen 85 in den Drucksack 22 zu strömen.

Zusätzlich oder alternaiv kann die Dichtfläche des Ventilsitzes 77 oder eine gegenüberliegende Anlage eine Ringdichtung 79 umfassen. Analoges gilt für die Stirnseite 81 des Ventilkörpers 71 beziehungsweise die gegenüberliegende Anlagefläche, die den Ventilsitz 51 bildet. Dabei wird die Positionierung der Dichtungen 79, welche insbesondere als Sitzdichtung ausgebildet sind, im Durchmesser derart angepasst, dass der Vorkammerdruck in der Vorkammer 74 und der auf den Ventilkörper 71 wirkende Druck des Kraftspeicherelementes 59 größer ist als der Innendruck im Druckbehälter 14 und des Atmosphärendrucks, welche beide auf den Ventilkörper 71 wirken. Daraus resultiert die Schließkraft.

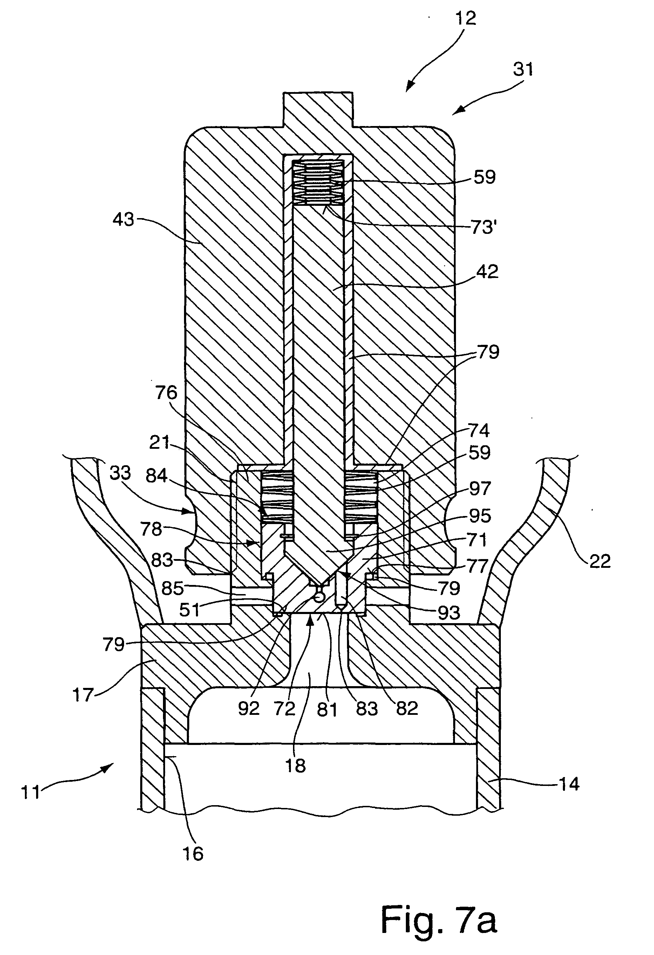

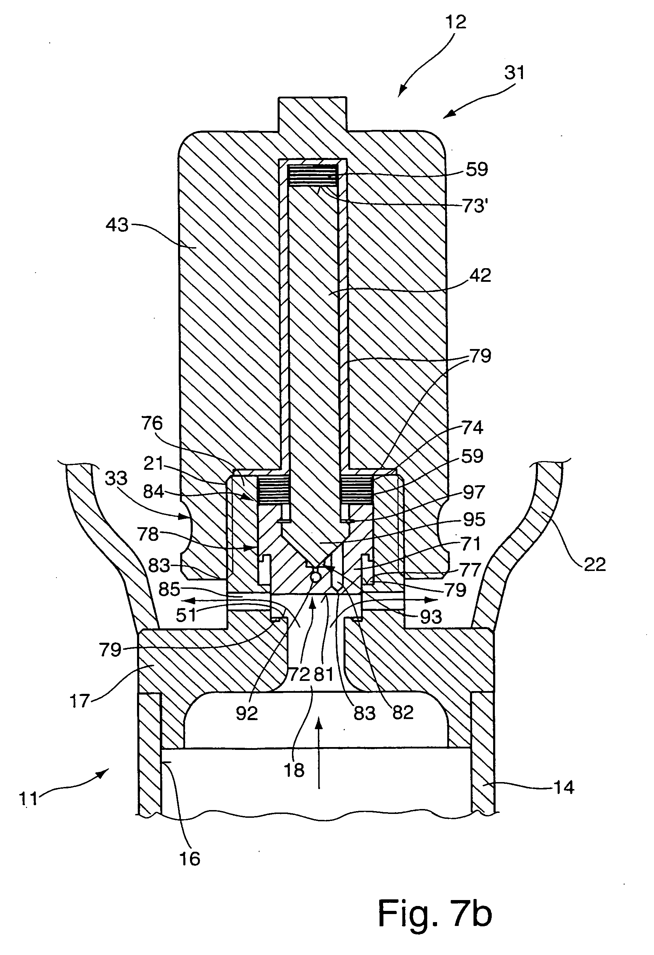

In den Figuren 7a und b ist eine weitere alternative Ausführungsform der kraftreduzierenden Einrichtung 33 für eine Verschlussvorrichtung 12 dargestellt. Diese Ausführungsform stellt eine Modifizierung der Ausführungsform gemäß Figur 6 dar. In Bezug auf die Übereinstimmungen wird auf die Beschreibung zu Figur 6 Bezug genommen. Gemäß Figur 7a ist die Verschlussvorrichtung 12 in einer Schließposition und in Figur 7b in einer Öffnungs- oder Ausströmposition dargestellt. Der Ventilkörper 71 umfasst einen Ventilkörper 95 eines zweiten Steuerventils 93, welches als Servosteuerventil oder als kraftreduzierendes Steuerventil zur Verringerung der Öffnungskräfte ausgebildet ist. In dem Ventilkörper 71 ist der Ventilkörper 95 des Steuerventils 93 längsbeweglich vorgesehen. Dieser Ventilkörper 95 ist mit dem Anker 42 verbunden. Über einen Federring 97 ist der Ventilkörper 95 zum Ventilkörper 71 gesichert und im Hinblick auf dessen Öffnungsbewegung begrenzt. Der Innendruck des Druckbehälters 16 gelangt über das Drosselventil 83 in den Kanal 82 und wirkt auf eine Kegelfläche des Ventilkörpers 95. Die Kegelfläche des Ventilkörpers 95 schließt eine Durchgangsbohrung 92, durch welche das Medium im Druckbehälter 14 nach dem Abheben des Ventilkörpers 95 über die Querkanäle 85 in den Drucksack 22 gelangen kann.

Die in Figur 7a dargestellten Kraftspeicherelemente 59 können beide vorgesehen sein. Alternativ kann auch nur eines der beiden Kraftspeicherelementen 59 vorgesehen sein. Ergänzend ist in dieser Ausführungsform eine Dichthülse 79 dargestellt, welche den Aktuator 43 zum Hochdruckraum bezüglich den herrschenden Drücken trennt.

Die Schließkraft bei dieser Ausführungsform resultiert daraus, dass auf den Querschnitt der kegelförmigen Spitze des Ventilkörpers 95 des Steuerventils 93, der die Öffnung 92 schließt, ein Behälterinnendruck und eine Schließkraft des Kraftspeichereiementes 59 wirkt, dem ein Atmosphärendruck entgegensteht, der durch die Querschnittsfläche des Bohrungsdurchmessers von der Öffnung 92 bestimmt ist. Aufgrund der Reduzierung der wirkenden Druckflächen auf den Durchmesser der Öffnung 92 sind äußerst geringe Schließkräfte erforderlich. Dies ermöglicht, dass ein Ansteuern des Aktuators 43 ein schnelles Öffnen des Steuerventils 73 bewirkt, so dass der zunächst in der Vorkammer 74 wirkende Druck an die Umgebung bzw. in den Drucksack 22 ausströmen kann. Anschließend wirkt der Behälterinnendruck auf die erste Druckfläche 81 des Ventilkörpers 71 und hebt von der Ventilsitzfläche 51 ab, so dass das Medium aus dem Behälterinnenraum unmittelbar über die Querkanäle 85 in den Drucksack 22 abströmen kann. Diese Position ist in Figur 7b dargestellt.

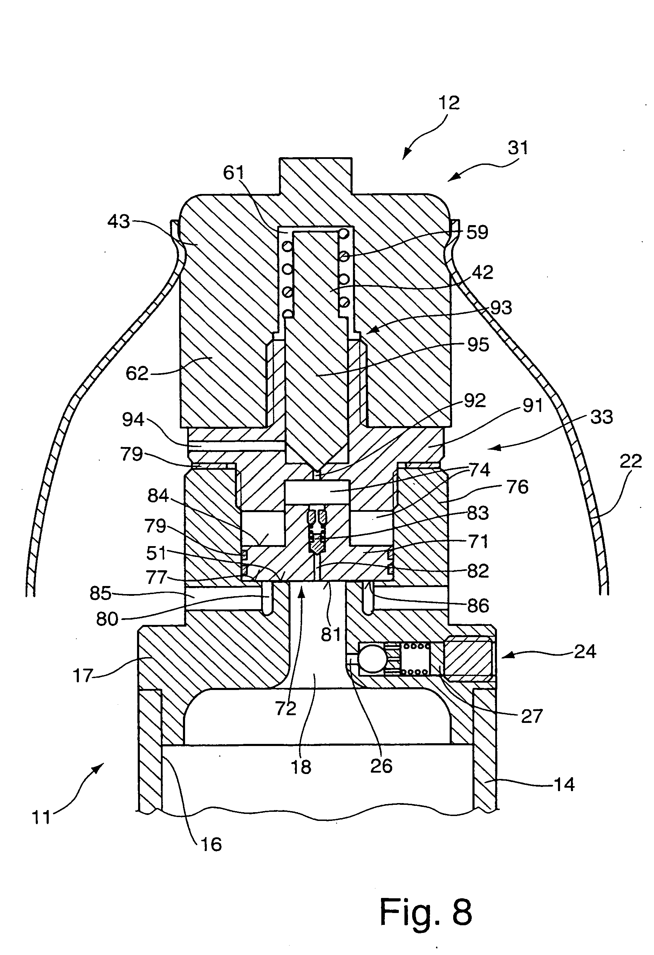

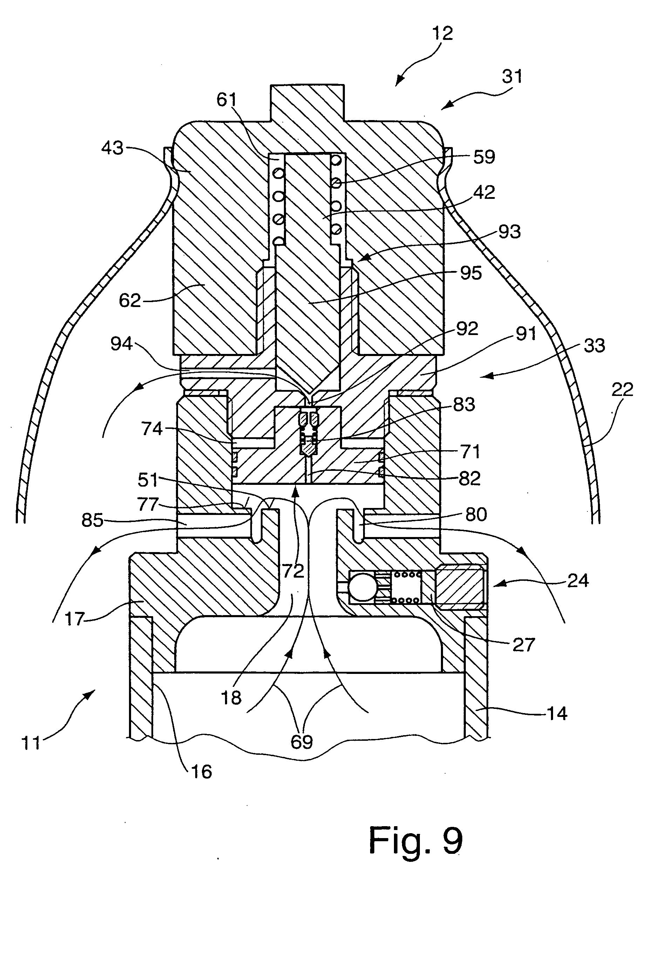

In den Figuren 8 und 9 ist eine weitere alternative Ausführungsform der kraftreduzierenden Einrichtung 33 für eine Verschlussvorrichtung 12 dargestellt. Bei dieser Ausführungsform ist die Haltehülse 76 beispielsweise einstückig mit dem Deckel 17 verbunden. Der Ventilkörper 71 ist frei bewegbar in der Vorkammer 74 vorgesehen. Die Vorkammer 74 ist durch einen Zwischenflansch 91 begrenzt, der gegenüberliegend das Gehäuse 62 der Antriebsvorrichtung 31 aufnimmt und zur Haltehülse 76, vorzugsweise unter Zwischenschaltung einer Dichtung 79, insbesondere durch eine Schraubverbindung, befestigt ist. Der Zwischenflansch 91 umfasst eine Öffnung 92, welche die Vorkammer 74 über eine Querbohrung 94 mit der Umgebung verbindet. Diese Öffnung 92 ist durch ein Ventilkörper 95 des Steuerventils 93 ansteuerbar.

Die die Schließkraft reduzierende Einrichtung 33 umfasst wiederum die Komponenten zwischen dem Ventilsitz 51 der Ausblasöffnung 18 und der Antriebsvorrichtung 31. Die Antriebvorrichtung 31 umfasst einen Anker 42, der einstückig oder durch eine lösbare Verbindung mit dem Ventilkörper 95 verbunden sein kann, wobei letzterer wiederum eine Komponente des Steuerventils 93 ist und einen Bestandteil der Schließkraft reduzierenden Einrichtung 33 darstellt. Das Kraftspeicherelement 59 ist wiederum in einer Kammer 61 des Gehäuses 62 von der Antriebsvorrichtung gelagert und bewegt den Ventilkörper 95 in eine Schließposition zur Öffnung 92.

Aus dieser Anordnung ergibt sich folgende Ansteuerung. Wie bei der vorangehenden Ausführungsform wird der Ventilkörper 71 durch den Druck der Vorkammer 74 gegen die Kräfte im Bereich der ersten Druckfläche 81 und die Kraft der dritten Druckfläche 86 mit Umgebungsdruck nach unten gedrückt. Die Druckdifferenz zwischen dem Druckgas und dem Vorkammervolumen wird über das Drosselventil 83 eingestellt. Zum Öffnen des Ventilkörpers 71 wird bei dieser Ausführungsform das Steuerventil 93 angesteuert, welches lediglich gegen Umgebungsdruck und die Federkraft des Kraftspeicherelementes 59 arbeitet. Sobald das Steuerventil 93 die Öffnung 92 öffnet, kann der in der Vorkammer 74 herrschende Druck an die Umgebung abströmen, wodurch in der Vorkammer 74 der Druck abnimmt und geringer wird, als derjenige, der auf die erste Druckfläche 81 wirkt. Dadurch wird ein Öffnen des Ventilkörpers 71 bewirkt, so dass das Druckgas aus dem Inneren des Druckbehälters 41,wie in Figur 7 dargestellt ist, ausströmen kann. Das Druckgas strömt aus dem Druckbehälter 14 über die Ausblasöffnung 18 aus, wird an der Stirnfläche 72 umgelenkt und gelangt über einen Ringraum 80, eine Vielzahl von Bohrungen oder Bohrungssegmenten in einen oder mehrere Querkanäle 85, die das Druckgas in das Innere eines Drucksackes 22 führen.

Das Kraftspeicherelement 59 wird derart dimensioniert, dass eine ausreichende Kraft vorgesehen ist, die in stromlosem Zustand der Antriebsvorrichtung 31 das Steuerventil 93 schließt und die vorzugsweise größer ist als die Kraft, die sich aus dem Druck der Vorkammer 74 und dem in der ersten Druckfläche 82 liegenden Querschnittes des Kanals 82 ergibt. Beim Schließen des Steuerventils 93 wird wegen des noch vorhandenen Überdruckes des Druckgases das Drosselventil 83 geöffnet, so dass der durch das Drosselventil 83 voreinstellbare Druck in der Vorkammer 74 wieder hergestellt wird. Dadurch wird der Ventilkörper 71 nach unten bewegt und schließt die Ausblasöffnung 18. Dabei liegt die Stirnseite 72 des Ventilkörpers 71 an dem ersten Ventilsitz 51 an. Gleichzeitig erfolgt eine Anlage der Stirnfläche 72 an dem zweiten Ventilsitz 77, der an der Haltehülse 76 vorgesehen ist. Dadurch wird bewirkt, dass wiederum der Umgebungsdruck auf die dritte Druckfläche 86 als auch der Behälterinnendruck auf die erste Druckfläche 81 wirkt. Durch schnelle ineinanderfolgende Öffnungs- und Schließvorgänge des Steuerventils 93 kann somit das Druckgas dosiert in den Drucksack 22 abgegeben werden. Durch diese Anordnung kann eine sanfte Ansteuerung mit einer kurzen Ansteuerzeit erzielt werden.

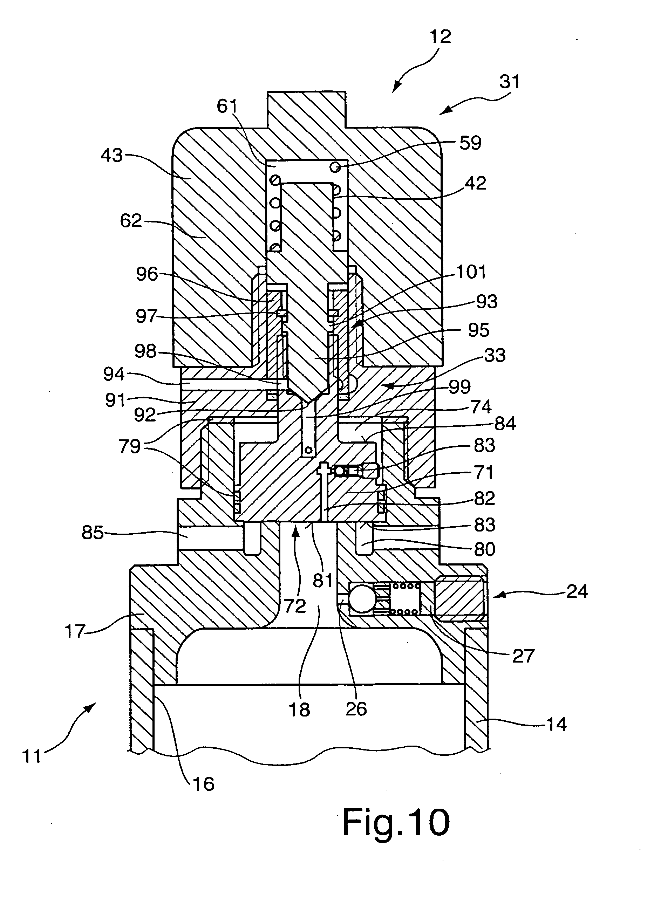

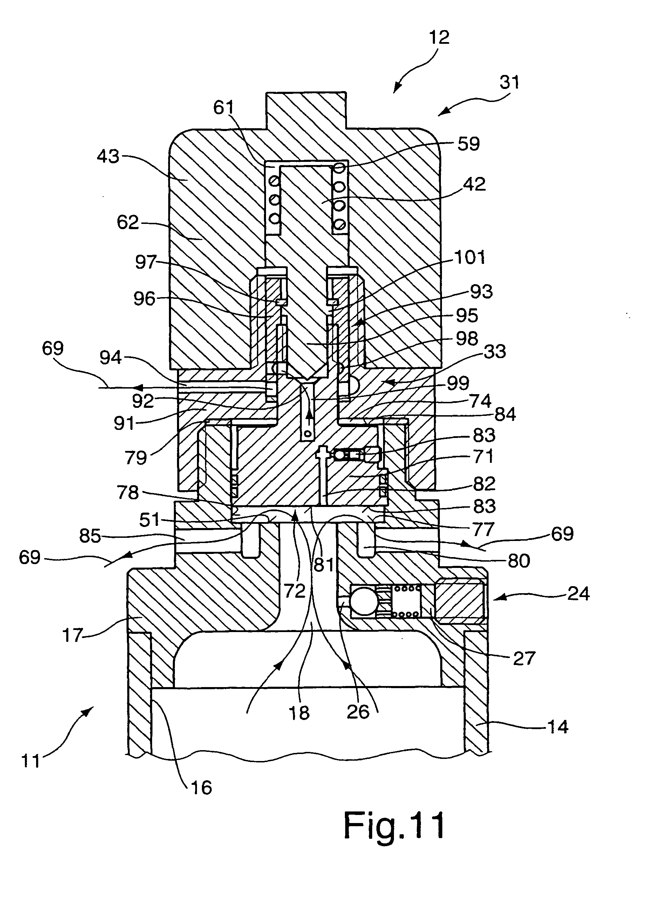

In Figur 10 ist eine weitere alternative Ausführungsform einer Verschlussvorrichtung 12 zu den Figuren 8 und 9 in einer Schließposition dargestellt. Figur 11 zeigt die alternative Ausführungsform gemäß Figur 10 in einer Arbeitsposition.

Die Verschlussvorrichtung 12 ist gegenüber derjenigen in Figur 8 und 9 ist dahingehend modifiziert, dass eine Zwangsansteuerung zur Öffnungsbewegung des Ventilkörpers 71 vorgesehen ist. Hierfür ist der Ventilkörper 71 bevorzugt zweiteilig ausgeführt. Der Ventilkörper 71 umfasst einen unteren oder ersten Bereich mit einer Stirnfläche 72, der gegenüberliegend die Öffnung 92 aufnimmt. Diese Öffnung 92 ist vom Zwischenflansch 91 in den Ventilkörper 71 verlagert. Der Zwischenflansch 91 nimmt den Ventilkörper 71 verschiebbar auf. Dadurch ist das gesamte Steuerventil 93 relativ zum Zwischenflansch 91 verfahrbar. Die Öffnung 92 geht über eine Verbindungsbohrung 98 in eine Querbohrung 94 über, die in dem Zwischenflansch 91 vorgesehen ist. Der Führungsabschnitt 96 ist durch eine Schraubverbindung zum unteren Teil des Ventilkörpers 71 befestigt, um eine einfache Montage zu ermöglichen. Der Ventilkörper 95 des Steuerventils 93 ist im Wesentlichen in dem unteren Teil des Kolbens geführt, um die Öffnung 92, welche durch Kanäle 99 mit der Vorkammer 74 in Verbindung steht, zu öffnen. Der Ventilkörper 95 weist zusätzliche Führungsabschnitte 101 auf, durch welche dieser in einem Wandabschnitt im Führungsabschnitt 96 geführt sein kann. In dem Führungsabschnitt 96 ist des Weiteren ein Federring 97 oder dergleichen eingesetzt, welcher eine Hinterschneidung für den weiteren Führungsabschnitt 101 am Ventilkörper 95 bildet. Der Ventilkörper 95 ist wiederum mit dem Anker 42 der Antriebsvorrichtung 31 verbunden, wobei ein Kraftspeicherelement 59 in der Kammer 61 des Gehäuses 62 der Antriebsvorrichtung 31 vorgesehen ist und den Ventilkörper 95 des Steuerventils 93 in eine Schließposition überführt.

Diese die Schließkraft reduzierende Einrichtung 33 funktioniert zunächst wie diejenige gemäß der Ausführungsform in den Figuren 7 und 8. Bei einer Ansteuerung des Steuerventils 93 zum Öffnen der Öffnung 92 erfolgt zunächst eine freie Bewegung des Ventilkörpers 95 des Steuerventils 93. Anschließend wird zwangsweise über den zusätzlichen Führungsabschnitt 101, welcher an dem Federring 97 anliegt beziehungsweise diesen hintergreift, der gesamte Ventilkörper 71 abgehoben. Sobald die Antriebsvorrichtung 31 stromlos geschalten oder abgeschalten wird, drückt wiederum das Kraftspeicherelement 59 den Ventilkörper 95 nach unten gegen die Öffnung 92. Da das Vorkammervolumen weitgehend drucklos ist, öffnet sich das Drosselventil 83, und die eingestellte Druckdifferenz zwischen dem Gasdruck im Druckbehälter 14 und der Vorkammerdruck wird wieder herstellt. Durch das Kraftspeicherelement 59 wird die Schließbewegung des Ventilkörpers 71 eingeleitet und gegebenenfalls unterstützt und der Ventilkörper 71 gegen den ersten und zweiten Ventilsitz 51, 77 gepresst.

Die Verschlussvorrichtungen 12 gemäß den Figuren 8 bis 11 weisen somit einen pneumatischen Servomechanismus auf. Die Verschlussvorrichtung 12 gemäß den Figuren 1 bis 3 weist hingegen einen mechanischen Servomechanismus auf. Die Einrichtung 33 reduziert somit die Betätigungskraft zum Öffnen und/oder Schließen der Ausblasöffnung durch zumindest einen Ventilkörper.

Alle vorbeschriebenen Merkmale sind jeweils für sich erfindungswesentlich und können beliebig miteinander kombiniert werden.

## Patentansprüche

1. Verschlussvorrichtung für einen mit Druckgas befüllbaren Druckbehälter (14) eines Kaltgasgenerators (11), wobei der Druckbehälter (14) an einem Ende einen geschlossenen Boden und am anderen Ende eine Behälteröffnung (16) umfasst, an welcher die Verschlussvorrichtung (12) zur Bildung eines Kaltgasgenerators (11) anordenbar ist, mit einem Ventilkörper (48, 71), der eine mit der Umgebung kommunizierende Ausblasöffnung (18) in einer Ruheposition schließt und der mit einer Antriebsvorrichtung (31) zum Öffnen der Ausblasöffnung (18) in eine Arbeitsposition überführbar ist, **dadurch gekennzeichnet, dass** zwischen zumindest einem Ventilsitz (51) der Ausblasöffnung (18) und der Antriebsvorrichtung (31) eine die aufzubringende Schließkraft reduzierende Einrichtung (33) vorgesehen ist, welche den zumindest einen Ventilkörper (48, 71) zwischen einer Ruheposition und einer Arbeitsposition ansteuert.

2. Verschlussvorrichtung nach Anspruch 1, **dadurch gekennzeichnet, dass** die Einrichtung (33) ein Druckelement (41) aufweist, welches an einem zum Ventilkörper (48) weisenden Ende zumindest eine Druckfläche (47), insbesondere kegelförmige Druckfläche, aufweist, durch welche zumindest ein Ventilkörper (48) zur Anlage in einem Ventilsitz (51) überführbar ist.

3. Verschlussvorrichtung nach Anspruch 1, **dadurch gekennzeichnet, dass** an einem der Ausblasöffnung (18) angeordneten Ventileinsatz (50) eine Vielzahl von radial ausgerichteten Öffnungen (49) vorgesehen sind, die jeweils einen Ventilsitz (51) aufweisen, denen jeweils ein Ventilkörper (48) zugeordnet ist und die Druckfläche (47) des Druckelementes (41) an den Ventilkörpern (48) angreift.

4. Verschlussvorrichtung nach einem der vorhergehenden Ansprüche, **dadurch gekennzeichnet, dass** das Druckelement (41) zum zumindest einen Ventilkörper (48) verschiebbar durch die Antriebsvorrichtung (31) ansteuerbar ist und die Druckfläche (47) am Druckelement (41) in einem spitzen Winkel zur Verschieberichtung ausgerichtet ist.

5. Verschlussvorrichtung nach einem der vorhergehenden Ansprüche, **dadurch gekennzeichnet, dass** benachbart zur radial ausgerichteten Öffnung (49) des Ventileinsatzes (50) eine radial verlaufende Anlagefläche (54) vorgesehen ist, welche einen Aufnahmeraum (56) zwischen dem Ventileinsatz (50) und der Druckfläche (47) des Druckelementes (41) begrenzt.

6. Verschlussvorrichtung nach einem der vorhergehenden Ansprüche, **dadurch gekennzeichnet, dass** das Druckelement (41) einen topfförmigen Abschnitt (46) aufweist, der die Ventilkörper (48) umgibt und am innenliegenden freien Ende die Druckfläche (47) aufweist und vorzugsweise zwischen einem Boden und der Druckfläche (47) Durchtrittsöffnungen (67) umfasst und insbesondere das Druckelement (41) an eine in dem topfförmigen Abschnitt (46) ragenden Endabschnitt des Ventileinsatzes (50) eine Führung (68) aufweist, die an einem Außenumfang des Ventileinsatzes (50) angreift.

7. Verschlussvorrichtung nach einem der vorhergehenden Ansprüche, **dadurch gekennzeichnet, dass** zwischen der Antriebsvorrichtung (31) und dem Druckelement (41) ein Kraftspeicherelement (59), insbesondere eine Druckfeder vorgesehen ist, die eine Kraft in Schließrichtung auf das Druckelement (41) aufbringt und vorzugsweise das Kraftspeicherelement (59) in einer Kammer (61) der Antriebsvorrichtung (31) vorgesehen ist, welche seitliche Öffnungen (63) aufweist, die zu einem Drucksack (22) führen.

8. Verschlussvorrichtung nach einem der vorhergehenden Ansprüche, **dadurch gekennzeichnet, dass** der Ventileinsatz (50) in einer Ausblasöffnung (18) im Deckel (17) des Druckbehälters (14), vorzugsweise lösbar, befestigbar ist und dass der Deckel (17) vorzugsweise eine zentrale Ausblasöffnung (18) aufweist und dass insbesondere der Deckel (17) ein Überdruckbegrenzungsventil (24) umfasst, welches in einer Bohrung (26) vorgesehen ist, das die Ausblasöffnung (18) mit der Umgebung verbindet.

9. Verschlussvorrichtung nach einem der vorhergehenden Ansprüche, **dadurch gekennzeichnet, dass** die Antriebsvorrichtung (31) einen Befestigungsabschnitt (21) aufweist, der an einem Verbindungsrand (19) eines Deckels (17) angreift und die Behälteröffnung (16) des Druckbehälters (14) schließt und vorzugsweise am Verbindungsrand (19) ein weiterer Befestigungsabschnitt (21) für einen mit Druckgas befüllbaren Drucksack (22) vorgesehen ist.

10. Verschlussvorrichtung nach Anspruch 1, **dadurch gekennzeichnet,**
**dass** die Einrichtung (33) einen als Kolben ausgebildeten Ventilkörper (71) aufweist, der mit einer Stirnfläche (72) an einem Ventilsitz (51) an der Ausblasöffnung (18) anliegt und eine erste Druckfläche (81) aufweist und dass der Ventilkörper (71) gegenüberliegend in einer Vorkammer (74) angeordnet ist, in der mit einem Drosselventil (83) ein gegenüber dem Betriebsdruck des Druckgases reduzierter Vorkammerdruck einstellbar ist, der auf eine zweite Druckfläche (84) des Kolbens (71) wirkt und vorzugsweise das Drosselventil (83) in einem Kanal (82) vorgesehen ist, welcher die Vorkammer (74) mit dem Druckbehälter (14) verbindet.

11. Verschlussvorrichtung nach Anspruch 10, **dadurch gekennzeichnet,**
**dass** der Ventilkörper (71) von einer an der Antriebsvorrichtung (31) anordenbaren Haltehülse (76) gehalten ist, die einteilig am Deckel (17) oder über Schraubverbindungen zum Verbindungsabschnitt (19) angeordnet ist, und die Haltehülse (76) eine Führung (78) für den Ventilkörper (71) umfasst.

12. Verschlussvorrichtung nach Anspruch 10, **dadurch gekennzeichnet,**
**dass** der Ventilkörper (71) zwischen dem Ventilsitz (51) und einem durch die Haltehülse (76) ausgebildeten weiteren Ventilsitz (77) eine dritte Druckfläche (86) aufweist, an der Atmosphärendruck anliegt und dass vorzugsweise zwischen der Haltehülse (76) und dem Gehäuse (62) der Antriebsvorrichtung (31) und vorzugsweise zwischen der Führung (78) der Haltehülse (76) und dem Ventilkörper (71) Dichtungselemente (79) vorgesehen sind.

13. Verschlussvorrichtung nach einem der Ansprüche 10 bis 12, **dadurch**
**gekennzeichnet, dass** in der Vorkammer (74) ein Kraftspeicherelement (59), insbesondere eine Druckfeder vorgesehen ist, die eine Kraft in Schließrichtung ausübt und vorzugsweise eine Hubbewegung in Öffnungsrichtung des Ventilkörpers (71) unmittelbar durch die Antriebsvorrichtung (31) ansteuerbar ist, oder dass die Öffnungsbewegung des Ventilkörpers (71) in der Vorkammer (74) durch einen Vorkammerdruck steuerbar ist und vorzugsweise ein Steuerventil (93) eine Durchgangsöffnung (92) zwischen der Vorkammer (74) und der Umgebung öffnet.

14. Verschlussvorrichtung nach Anspruch 13, **dadurch gekennzeichnet,**
**dass** das Steuerventil (93) von der Antriebsvorrichtung (31) ansteuerbar ist, oder dass das Steuerventil (93) mit einem Kraftspeicherelement (59) in eine Schließstellung anordenbar ist, oder dass das Steuerventil (93) eine Öffnung (92) in einem Zwischenflansch (91) schließt, welcher eine Antriebsvorrichtung (31) aufnimmt und an einem Deckel (17) anordenbar ist.

15. Verschlussvorrichtung nach einem der Ansprüche 10 bis 14, **dadurch**
**gekennzeichnet, dass** zwischen einem Führungsabschnitt (96) eines bevorzugt zweiteiligen Ventilkörpers (71) und einem Ventilkörper (95) des Steuerventils (93), der von dem Führungsabschnitt (96) zumindest teilweise umgeben ist, eine Zwangsansteuerung des Ventilkörpers (71) vorgesehen ist, derart, dass bei einer Öffnungsbewegung des Ventilkörpers (95) am Steuerventil (93) ein Abheben des Ventilkörpers (71) vom zumindest einen Ventilsitz (51, 77) vorgesehen ist und vorzugsweise die Zwangssteuerung durch ein in einem Führungsabschnitt (96) des Ventilkörpers (71) eingesetztes Element (97), insbesondere Federring, erfolgt, der von einem weiteren Führungsabschnitt (101) am Ventilkörper (95) des Steuerventils (93) vorgesehen ist.

16. Verschlussvorrichtung nach einem der vorhergehenden Ansprüche,
**dadurch gekennzeichnet, dass** die Antriebsvorrichtung (31) als elektromagnetischer Antrieb, als piezokeramisch Plattenstapel- oder Biegeplattenantrieb ausgebildet ist oder dass die Ansteuerung der Antriebsvorrichtung (31) und/oder der Behälterdruck zumindest von einem Drucksensor (27) des Druckbehälters (14) überwacht ist.

## Claims

1. A closure apparatus for a pressure container (14), which can be filled with compressed gas, of a cold gas generator (11), the pressure container (14) comprising at one end a closed base and at the other end a container opening (16) on which the closure apparatus (12) can be arranged for forming a cold gas generator (11), having a valve body (48, 71) which, in a rest position, closes an ejection opening (18) communicating with the environment and which can be transferred into a working position by way of a drive apparatus (31) for opening the ejection opening (18), **characterized in that** a device (33) which reduces the closing force to be applied and activates the at least one valve body (48, 71) between a rest position and a working position is provided between at least one valve seat (51) of the ejection opening (18) and the drive apparatus (31).

2. The closure apparatus as claimed in claim 1, **characterized in that** the device (33) has a pressure element (41) having at an end pointing toward the valve body (48) at least one pressure surface (47), in particular a conical pressure surface, by which at least one valve body (48) can be transferred for abutment in a valve seat (51).

3. The closure apparatus as claimed in claim 1, **characterized in that** there are provided on a valve insert (50) arranged in the ejection opening (18) a large number of radially oriented openings (49) which each have a valve seat (51) and with each of which a valve body (48) is associated and the pressure surface (47) of the pressure element (41) acts on the valve bodies (48).

4. The closure apparatus as claimed in one of the preceding claims, **characterized in that** the pressure element (41) can be activated by the drive apparatus (31) so as to be displaceable to at least one valve body (48) and the pressure surface (47) on the pressure element (41) is oriented at an acute angle to the direction of displacement.

5. The closure apparatus as claimed in one of the preceding claims, **characterized in that** a radially running abutment surface (54), which delimits a receiving space (56) between the valve insert (50) and the pressure surface (47) of the pressure element (41), is provided adjacent to the radially oriented opening (49) of the valve insert (50).

6. The closure apparatus as claimed in one of the preceding claims, **characterized in that** the pressure element (41) has a cup-shaped portion (46) which surrounds the valve bodies (48) and has at the internal free end the pressure surface (47) and comprises through-openings (67), preferably between a base and the pressure surface (47)and in particular the pressure element (41) has, at an end portion of the valve insert (50) that protrudes in the cup-shaped portion (46), a guide (68) acting on an outer circumference of the valve insert (50).

7. The closure apparatus as claimed in one of the preceding claims, **characterized in that** a force storage element (59), in particular a compression spring which applies a force to the pressure element (41) in the closing direction, is provided between the drive apparatus (31) and the pressure element (41) and preferably the force storage element (59) is provided in a chamber (61) of the drive apparatus (31), which has lateral openings (63) leading to a pressure bag (22).

8. The closure apparatus as claimed in one of the preceding claims, **characterized in that** the valve insert (50) can be fastened, preferably releasable, into an ejection opening (18) in the cover (17) of the pressure container (14) and that the cover (17) preferably has a central ejection opening (18) and the cover (17) comprises an excess pressure limiting valve (24) which is provided in a hole (26) and connects the ejection opening (18) to the environment.

9. The closure apparatus as claimed in one of the preceding claims, **characterized in that** the drive apparatus (31) has a fastening portion (21) which acts on a connecting edge (19) of a cover (17) and closes the container opening (16) of the pressure container (14) and in particular a further fastening portion (21) for a pressure bag (22), which can be filled with compressed gas, is provided on the connecting edge (19).

10. The closure apparatus as claimed in claim 1, **characterized in that** the device (33) has a valve body (71) which is embodied as a piston, abuts with an end face (72) against a valve seat (51) on the ejection opening (18) and has a first pressure surface (81) and **in that** the valve body (71) is arranged opposite in a prechamber (74) in which a restrictor valve (83) can be used to set a prechamber pressure which is reduced compared to the operating pressure of the compressed gas and acts on a second pressure surface (84) of the piston (71) and preferably the restrictor valve (18) is provided in a channel (82) connecting the prechamber (74) to the pressure container (14).

11. The closure apparatus as claimed in claim 10, **characterized in that** the valve body (71) is held by a holding sleeve (76) which can be arranged on the drive apparatus (31) and is arranged in one piece on the cover (17) or via screw connections to the connecting portion (19), and the holding sleeve (76) comprises a guide (78) for the valve body (71).

12. The closure apparatus as claimed in claim 10, **characterized in that** the valve body (71) has, between the valve seat (51) and a further valve seat (77) formed by the holding sleeve (76), a third pressure surface (86) to which atmospheric pressure is applied and that preferably sealing elements (79) are provided between the holding sleeve (76) and the housing (62) of the drive apparatus (31) and preferably between the guide (78) of the holding sleeve (76) and the valve body (71).

13. The closure apparatus as claimed in one of claims 10 to 12, **characterized in that** a force storage element (59), in particular a compression spring which exerts a force in the closing direction, is provided in the prechamber (74) and preferably a stroke movement in the opening direction of the valve body (71) can be activated directly by the drive apparatus (31) or that the opening movement of the valve body (71) in the prechamber (74) can be controlled by a prechamber pressure and preferably a control valve (93) opens a through-opening (92) between the prechamber (74) and the environment.

14. The closure apparatus as claimed in claim 13, **characterized in that** the control valve (93) can be activated by the drive apparatus (31) or that the control valve (93) can be arranged into a closing position by way of a force storage element (59) or that the control valve (93) closes an opening (92) in an intermediate flange (91) which receives a drive apparatus (31) and can be arranged on a cover (17).

15. The closure apparatus as claimed in one of claims 10 to 14, **characterized in that** between a guide portion (96) of a preferably two-part valve body (71) and a valve body (95) of the control valve (93), which is at least partly surrounded by the guide portion (96), a forced activation of the valve body (71) is provided in such a way that during an opening movement of the valve body on the control valve (93), a raising of the valve body (71) from at least one valve seat (51, 77) is provided and preferably the forced control is carried out by an element (97) inserted in a guide portion (96) of the valve body (71), in particular a spring ring provided by a further guide portion (101) on the valve body (95) of the control valve (93).

16. The closure apparatus as claimed in one of the preceding claims, **characterized in that** the drive apparatus (31) is embodied as an electromagnetic drive, as a piezoceramic plate stack drive or bending plate drive or that the activation of the drive apparatus (31) and/or the container pressure is monitored at least by a pressure sensor (27) of the pressure container (14).

## Revendications

1. Dispositif de fermeture pour un réservoir sous pression (14) pouvant être rempli de gaz sous pression d'un générateur de gaz froid (11), le réservoir sous pression (14) comprenant, à une extrémité, un fond fermé et, à l'autre extrémité, une ouverture de réservoir (16) où peut être disposé le dispositif de fermeture (12) en vue de former un générateur de gaz froid (11), ledit dispositif étant équipé d'un corps de soupape (48, 71) qui ferme, dans une position de repos, une ouverture d'évacuation (18) communiquant avec le milieu ambiant et qui, au moyen d'un dispositif d'entraînement (31) permettant d'ouvrir l'ouverture d'évacuation (18), peut passer dans une position de travail, **caractérisé en ce qu'**il est prévu, entre au moins un siège de soupape (51) de l'ouverture d'évacuation (18) et le dispositif d'entraînement (31), un dispositif (33) réduisant la force de fermeture devant être fournie, lequel active ledit au moins un corps de soupape (48, 71) pour le faire passer d'une position de repos à une position de travail.

2. Dispositif de fermeture selon la revendication 1, **caractérisé en ce que** le dispositif (33) présente un élément de pression (41) qui présente, à une extrémité orientée vers le corps de soupape (48), au moins une surface de pression (47), notamment une surface de pression de forme conique, au moyen de laquelle au moins un corps de soupape (48) peut être déplacé de manière à reposer dans un siège de soupape (51).

3. Dispositif de fermeture selon la revendication 1, **caractérisé en ce qu'**il est prévu, sur une garniture de soupape (50) disposée dans l'ouverture d'évacuation (18), une pluralité d'ouvertures (49) orientées de manière radiale et dont chacune présente un siège de soupape (51) auquel est attribué un corps de soupape (48), et **en ce**
**que** la surface de pression (47) de l'élément de pression (41) s'applique sur les corps de soupape (48).

4. Dispositif de fermeture selon l'une des revendications précédentes, **caractérisé en ce que** l'élément de pression (41) peut être activé par le dispositif d'entraînement (31) afin de pouvoir être déplacé vers ledit au moins un corps de soupape (48), et **en ce que** la surface de pression (47) située sur l'élément de pression (41) est orientée de manière à former un angle aigu par rapport au sens de déplacement.

5. Dispositif de fermeture selon l'une des revendications précédentes, **caractérisé en ce qu'**il est prévu, de manière contiguë à l'ouverture (49) de la garniture de soupape (50) orientée de manière radiale, une surface d'appui (54) s'étendant de manière radiale, laquelle délimite une chambre de réception (56) entre la garniture de soupape (50) et la surface de pression (47) de l'élément de pression (41).

6. Dispositif de fermeture selon l'une des revendications précédentes, **caractérisé en ce que** l'élément de pression (41) présente une partie (46) en forme de pot qui entoure les corps de soupape (48) et présente à l'extrémité libre, côté intérieur, la surface de pression (47), et comprend, de préférence entre un fond et la surface de pression (47), des ouvertures de traversée (67), et **en ce que** notamment l'élément de pression (41) présente, à une extrémité de la garniture de soupape (50) rentrant dans la partie (46) en forme de pot, un guide (68) qui s'applique sur la circonférence extérieure de la garniture de soupape (50).

7. Dispositif de fermeture selon l'une des revendications précédentes, **caractérisé en ce qu'**il est prévu, entre le dispositif d'entraînement (31) et l'élément de pression (41), un élément d'accumulation d'énergie (59), notamment un ressort de compression, qui applique sur l'élément de pression (41) une force agissant dans le sens de fermeture, et **en ce que** de préférence l'élément d'accumulation d'énergie (59) est prévu dans une chambre (61) du dispositif d'entraînement (31), laquelle présente des ouvertures latérales (63) qui mènent à un sac de pression (22)

8. Dispositif de fermeture selon l'une des revendications précédentes, **caractérisé en ce qu'**il est possible de fixer, de préférence de manière amovible, la garniture de soupape (50) dans une ouverture d'évacuation (18) située dans le couvercle (17) du réservoir sous pression (14), et **en ce que** le couvercle (17) présente de préférence une ouverture d'évacuation (18) centrale, et **en ce que** notamment le couvercle (17) comprend une soupape limitatrice de surpression (24) qui est prévue dans un trou (26) qui relie l'ouverture d'évacuation (18) au milieu ambiant.

9. Dispositif de fermeture selon l'une des revendications précédentes, **caractérisé en ce que** le dispositif d'entraînement (31) présente une partie de fixation (21) qui s'applique sur un bord d'assemblage (19) d'un couvercle (17) et ferme l'ouverture de réservoir (16) du réservoir sous pression (14), et **en ce qu'**il est prévu, de préférence sur le bord d'assemblage (19), une autre partie de fixation (21) pour un sac de pression (22) pouvant être rempli de gaz sous pression.

10. Dispositif de fermeture selon la revendication 1, **caractérisé en ce que** le dispositif (33) présente un corps de soupape (71) réalisé sous forme de piston, lequel repose avec une face frontale (72) sur un siège de soupape (51) situé au niveau de l'ouverture d'évacuation (18) et présente une première surface de pression (81), et **en ce que** le corps de soupape (71) est disposé en regard dans une préchambre (74) dans laquelle il est possible, à l'aide d'une soupape d'étranglement (83), de générer une pression de préchambre réduite par rapport à la pression de fonctionnement du gaz sous pression et qui agit sur une deuxième surface de pression (84) du piston (71), et **en ce que** de préférence la soupape d'étranglement (83) est prévue dans un canal (82) qui relie la préchambre (74) au réservoir sous pression (14).

11. Dispositif de fermeture selon la revendication 10, **caractérisé en ce que** le corps de soupape (71) est maintenu par une douille de maintien (76) pouvant être disposée sur le dispositif d'entraînement (31), laquelle est disposée sur le couvercle (17) en formant une seule pièce avec celui-ci ou est montée sur la partie de fixation (19) par assemblages vissés, et **en ce que** la douille de maintien (76) comprend un guide (78) pour la corps de soupape (71).

12. Dispositif de fermeture selon la revendication 10, **caractérisé en ce que** le corps de soupape (71) présente, entre le siège de soupape (51) et un autre siège de soupape (77) formé par la douille de maintien (76), une troisième surface de pression (86) sur laquelle agit la pression atmosphérique, et **en ce que** des éléments d'étanchéité (79) sont prévus de préférence entre la douille de maintien (76) et le boîtier (62) du dispositif d'entraînement (31), et de préférence entre le guide (78) de la douille de maintien (76) et le corps de soupape (71).

13. Dispositif de fermeture selon l'une des revendications 10 à 12, **caractérisé en ce que** dans la préchambre (74) est prévu un élément d'accumulation d'énergie (59), notamment un ressort de compression, qui exerce une force dans le sens de fermeture, et **en ce que** de préférence un mouvement de levée dans le sens d'ouverture du corps de soupape (71) est directement activable par le dispositif d'entraînement (31), ou **en ce que** le mouvement d'ouverture du corps de soupape (71) ayant lieu dans la préchambre (74) est activable par une pression régnant dans la préchambre, et **en ce que** de préférence une soupape de commande (93) ouvre un trou de passage (92) entre la préchambre (74) et le milieu ambiant.

14. Dispositif de fermeture selon la revendication 13, **caractérisé en ce que** la soupape de commande (93) est activable par le dispositif d'entraînement (31), ou **en ce que** la soupape de commande (93) peut être disposée dans une position fermée à l'aide d'un élément d'accumulation d'énergie (59), ou **en ce que** la soupape de commande (93) ferme une ouverture (92) ménagée dans une bride intermédiaire (91) qui reçoit un dispositif d'entraînement (31) et peut être disposée sur un couvercle (17).

15. Dispositif de fermeture selon l'une des revendications 10 à 14, **caractérisé en ce qu'**une activation forcée du corps de soupape (71) est prévue entre une partie de guidage (96) d'un corps de soupape (71) réalisé de préférence en deux parties et un corps de soupape (95) de la soupape de commande (93), lequel est entouré, du moins partiellement, par la partie de guidage (96), de manière à ce que lors d'un mouvement d'ouverture du corps de soupape (95) de la soupape de commande (93), une levée du corps de soupape (71) dudit au moins un siège de soupape (51, 77) est prévue, et **en ce que** de préférence l'activation forcée est effectuée par un élément (97) inséré dans une partie de guidage (96) du corps de soupape (71), notamment une rondelle élastique, qui est prévu(e) sur une autre partie de guidage (101) située sur le corps de soupape (95) de la soupape de commande (93).

16. Dispositif de fermeture selon l'une des revendications précédentes, **caractérisé en ce que** le dispositif d'entraînement (31) est réalisé sous forme d'entraînement électromagnétique, d'entraînement en pile de disques piézocéramique ou en disques flexibles piézocéramiques, ou **en ce que** l'activation du dispositif d'entraînement (31) et/ou la pression régnant dans le réservoir est/sont surveillée(s) par au moins un capteur de pression (27) du réservoir sous pression (14).
